# EUROPÄISCHE PATENTSCHRIFT

(11) **EP 2 218 598 B1**
(45) Veröffentlichungstag und Bekanntmachung des Hinweises auf die Patenterteilung: **09.09.2015**
(21) Anmeldenummer: 10153491.5
(22) Anmeldetag: 12.02.2010
(51) Int. Cl.: B60H 1/00

(54) **Klimaanlage für ein Kraftfahrzeug**
Vehicle air conditioning system
Dispositif de climatisation de véhicule automobile

(30) Priorität: 16.02.2009 DE 102009009065
(43) Veröffentlichungstag der Anmeldung: 18.08.2010
(73) Patentinhaber: MAHLE Behr GmbH & Co. KG, 70469 Stuttgart (DE)
(72) Erfinder: Litwing, Erich, 73565 Spraitbach (DE); Lindauer, Sascha, 73614 Schorndorf (DE); Mühleisen, Harald, 70771 Leinfelden-Echterdingen (DE); Otzelberger, Norbert, 70806 Kornwestheim (DE)
(74) Vertreter: Grauel, Andreas

(56) Entgegenhaltungen:
- EP-A2- 1 674 310
- FR-A1- 2 769 694
- FR-A1- 2 911 815
- JP-A- 11 170 841
- US-A1- 2007 023 162

## Beschreibung

Die Erfindung betrifft eine Klimaanlage, insbesondere für ein Kraftfahrzeug, gemäß dem Oberbegriff des Anspruchs 1.

Klimaanlagen werden in Kraftfahrzeugen eingesetzt, um den Fahrzeuginnenraum auf eine für die Fahrzeuginsassen angenehme Temperatur zu bringen bzw. diese zu halten. Nach den jeweiligen Erfordernissen kann die Kraftfahrzeugklimaanlage dabei wirken, um die Luft in dem Kraftfahrzeuginnenraum zu erwärmen und/oder zu kühlen.

Um zu vermeiden, dass der in den Fahrzeuginnenraum einzuleitende Frischluftstrom Feuchtigkeit enthält bzw. um auch bestimmte Bauteile der Klimaanlage vor Feuchtigkeit zu schützen, sind Wasserabscheidungseinrichtungen notwendig. Da in den heutzutage gängigen Kraftfahrzeugen üblicherweise auf eine fahrzeugseitige Wasserabscheidung vor der Klimaanlage verzichtet wird, muss abgeschiedenes Wasser möglichst früh wieder aus der Klimaanlage geführt werden. Aus dem Stand bekannte Einrichtungen weisen hierzu in der Regel nur einen Durchbruch im Rohbau auf, so dass Wasser aus verschiedenen Gehäuseteilen anlagenintern zusammengeführt werden muss.

Da der Filterbereich der Klimaanlage meist tiefer sitzt als der Verdampfer, muss das abgeschiedene Wasser über einen separaten Kanal oder einen Bypass in Richtung eines Kondenswasserablaufs geleitet werden. Dies ist konstruktiv aufwendig bzw. erfordert Bauraum.

Eine einfache Zusammenführung von zwei oder mehreren Wasserabläufen über Gehäusetrennungen hinweg ist daher wünschenswert.

Die EP 1674310 A2 offenbart eine zweikanalige Klimaanlage mit zwei Fluidkanälen, die parallel zueinander geführt sind. Die JP 11 170841 offenbart eine Klimaanlage mit einem Gehäuse mit einer Verbindung von Teilen des Gehäuses.

Daher ist es die Aufgabe der vorliegenden Ereindung, eine Klimaanlage für ein Kraftfahrzeug zur Verfügung zu stellen, bei welcher auf konstruktiv einfache Art und Weise eine effektive Wasserabscheidung erzielt werden kann.

Die Aufgabe der vorliegende Erfindung wird durch eine Klimaanlage für ein Kraftfahrzeug mit den Merkmalen gemäß Anspruch 1 gelöst. Vorteilhafte Weiterbildungen der vorliegenden Erfindung sind in den Unteransprüchen definiert.

Erfindungsgemäß wird eine Klimaanlage, insbesondere für ein Kraftfahrzeug, bereitgestellt, bei welcher eine Vielzahl von Funktionseinheiten in einem Luftströmungspfad angeordnet ist, wobei die Funktionseinheiten zumindest teilweise von jeweiligen Gehäusen umgeben sind, wobei die Vielzahl von Funktionseinheiten zumindest ein Gebläse, ein Filter und einen Verdampfer umfasst. Gemäß der Erfindung ist zumindest ein erstes Gehäuse der jeweiligen Gehäuse mit einem Verbindungselement zum Ableiten von Kondenswasser und zum direkten dichten Verbinden des ersten Gehäuses über das Verbindungselement mit einem zweiten Gehäuse der jeweiligen Gehäuse versehen, wobei das Verbindungselement mit dem ersten Gehäuse über Eingriffselemente am ersten Gehäuse und Öffnungen des Verbindungselements verbindbar ist und mit dem zweiten Gehäuse mittels eines Bajonettverschlusses verbindbar ist.

Durch die erfindungsgemäße Konfiguration wird ermöglicht, zwei oder auch mehrere Wasserabläufe über Gehäusetrennungen hinweg zusammenzuführen, wodurch eine effektive und konstruktiv einfache Wasserabscheidung realisiert wird. Es ist darüber hinaus auch kein stetiges Gefälle zwischen einem Lufteintritt der wasserführenden Luft in die Klimaanlage und dem Kondenswasseraustritt notwendig, welche Konfiguration sehr bauraumintensiv ist, so dass gemäß der Erfindung auch eine bessere Bauraumausnutzung erzielt wird.

Gemäß einer bevorzugten Ausführungsform weist das Verbindungselement einen Stutzen auf.

Gemäß einer weiteren bevorzugten Ausführungsform ist das Verbindungselement als Tülle ausgebildet.

Vorzugsweise ist an dem Verbindungselement eine Dichtung, insbesondere ein O-Ring, vorgesehen.

Gemäß noch einer weiteren bevorzugten Ausführungsform weist das zweite Gehäuse, welches mit dem ersten Gehäuse verbindbar ist, eine Öffnung auf, um das Verbindungselement darin aufzunehmen. Das Einbringen des Kondenswasserstutzens mit Dichtung oder der Tülle oder eines ähnlich gestalteten Bauteils, das bei der Montage mit einem zweiten Bauteil, hier mit der Öffnung des weiteren Gehäuses, eine dichte Verbindung herstellt, ermöglicht es auf einfache und effektive Weise, die Wasserabscheidung in der Klimaanlage vorzusehen

Vorzugsweise ist die Öffnung mit einem Stutzen versehen, in welchen das Verbindungselement einführbar ist.

Noch bevorzugter ist die Öffnung verschließbar. Hierdurch kann der Wasserstrom, der zu einem Kondenswasserablauf geführt wird, geregelt bzw. gesteuert werden.

Gemäß einer weiteren bevorzugten Ausführungsform ist die Öffnung mit einer Klappe versehen, welche zum Öffnen und Schließen der Öffnung ausgebildet ist.

In noch einer weiteren bevorzugten Ausführungsform ist in dem Gehäuse, welches das Verbindungselement aufweist, ein Filter und/oder ein Gebläse, insbesondere eine Filter-Gebläse-Einheit, angeordnet.

Darüber hinaus ist das zweite Gehäuse, welches mit dem ersten Gehäuse zu verbinden ist, gemäß noch einer weiteren bevorzugten Ausführungsform ein Verteilergehäuse, welches einen Kondenswasserablauf aufweist. Gemäß der Ausführungsform wird eintretendes Wasser noch vor dem Filter erfasst und auf einem kurzen Weg in das Verteilergehäuse eingeleitet, wo es dem Kondenswasserablauf zugeführt wird. Das Wasser wird vor Erreichen des Gebläsebereichs abgeleitet und somit kann das Wasser nicht den Gebläsemotor beschädigen bzw. negativ beeinflussen. Auch wird durch diese Konfiguration ein Mitreißen des Wassers in den Luftstrom, der zu dem Verdampfer zugeführt wird, minimiert bzw. vollständig unterbunden und ein Bypass für die Luft im Bereich des Verdampfers ist überflüssig.

Vorzugsweise ist in oder an dem Verteilergehäuse ein Verdampfer angeordnet.

Besonders bevorzugt ist es, wenn das Verbindungselement an dem ersten Gehäuse bezüglich des Lüftströmungspfads vor dem Filter angeordnet ist.

Auch ist bevorzugt, wenn das Verbindungselement und die mit einem Stutzen versehene Öffnung des zweiten Gehäuses über einen Bajonettverschluss verbindbar sind. Dies ermöglicht eine besonders einfache Montage bzw. Demontage im Servicefall.

Gemäß noch einer weiteren bevorzugten Ausführungsform ist hinter der Öffnung in dem Gehäuse ein Labyrinth vorgesehen.

Gemäß noch einer weiteren bevorzugten Ausführungsform weist das Verbindungselement zumindest ein Eingriffselement auf, welches in eine entsprechend in dem ersten Gehäuse vorgesehen Öffnung eingreift bzw. einrastet.

Gemäß einer weiteren bevorzugten Ausführungsform weist die Gebläse-Filter-Funktionseinheit einen Filter und ein Gebläse auf. Vorzugsweise ist der Filter in einem ersten Gehäuseteil und das Gebläse in einem zweiten Gehäuseteil angeordnet. Vorzugsweise sind das erste und zweite Gehäuseteil über das Verteilergehäuse miteinander verbunden.

Gemäß noch einer weiteren bevorzugten Ausführungsform ist unterhalb des ersten Gehäuseteils eine Wanne angeordnet, welche aus dem Filter abgeschiedene Schmutzpartikel und Wasser sammelt und aus der Klimaanlage bzw. aus der Karosserie abführt.

Vorzugsweise ist die Wanne mit einem Deckel des ersten Gehäuseteils über einen Stutzen verbunden.

Vorzugsweise umfasst die Klimaanlage weiterhin zumindest eine Heizenrichtung zum Erwärmen des Luftstroms und/oder einen elektrischen Zuheizer und/oder ein Expansionsventil.

Im Folgenden wird die Erfindung anhand eines Ausführungsbeispiels unter Bezugnahme auf die Zeichnung detailliert erläutert. In der Zeichnung zeigen:
- Fig. 1: schematische Ansicht der Wasser- und Luftführung gemäß dem Stand der Technik;
- Fig. 2: schematische Ansicht einer Verbindung von zwei Gehäuseteilen gemäß einer Ausführungsform;
- Fig. 3: eine Schnittansicht der Verbindung von zwei Gehäuseteilen von Fig. 2;
- Fig. 4: eine Schnittansicht einer weiteren Ausführungsform der Verbindung von zwei Gehäuseteilen;
- Fig. 5: eine Schnittansicht einer weiteren Ausführungsform der Verbindung von zwei Gehäuseteilen;
- Fig. 6A: bis 6C jeweilige Darstellungen der Zusammenbauschritte der Gehäuseteile;
- Fig. 7: eine Vorderansicht einer Gebläse-Filter-Funktionseinheit;
- Fig. 8: eine Rückansicht der Gebläse-Filter-Funktionseinheit von Fig. 7; und
- Fig. 9: eine perspektivische Ansicht einer Wanne gemäß einer Ausführungsform.

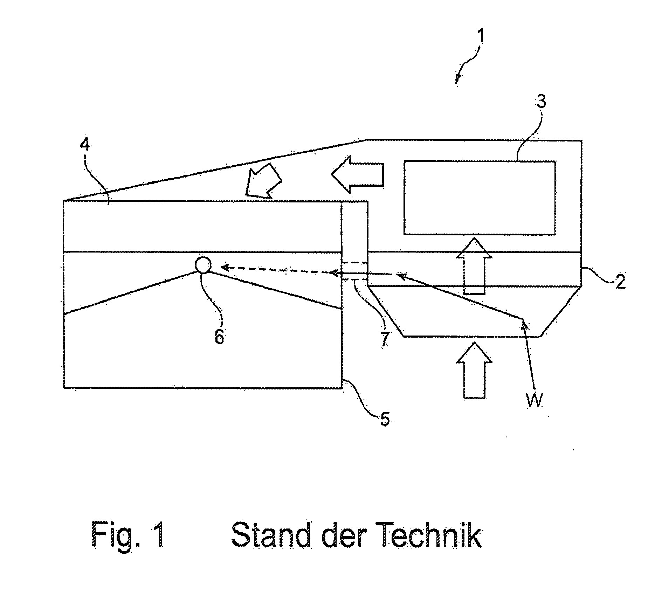

Figur1 zeigt eine schematische Ansicht der Wasser- und Luftführung durch Funktionseinheiten einer Klimaanlage 1 gemäß dem Stand der Technik. Die in Fig. 1 dargestellten Funktionseinheiten umfassen ein Filter 2, ein Gebläse 3 und einen Verdampfer 4, welcher an einem Verteilergehäuse 5, welches mit einem Kondenswasserablauf 6 versehen ist, angeordnet ist. Die Klimaanlage 1 kann darüber hinaus als weitere Funktionseinheiten einen Heizer, einen elektrischen Zuheizer, einen Kompressor, einen Kondensator und ein Expansionsventil aufweisen, welche hier nicht dargestellt sind. Der Luftstrom L tritt in der hier dargestellten Anordnung gemäß dem Stand der Technik in das Filter 2 ein, und wird über das Gebläse, welches z. B. als liegende Welle ausgebildet ist, dem Verdampfer 3 zugeführt. Die Führung des Wasserstroms W verläuft dagegen durch das Filter 3 über einen Bypass 7 zu dem Verteilergehäuse 5, wo das Wasser über den Konsenswasserablauf 6 aus dem Kreislauf der Klimaanlage 1 abgeleitet wird.

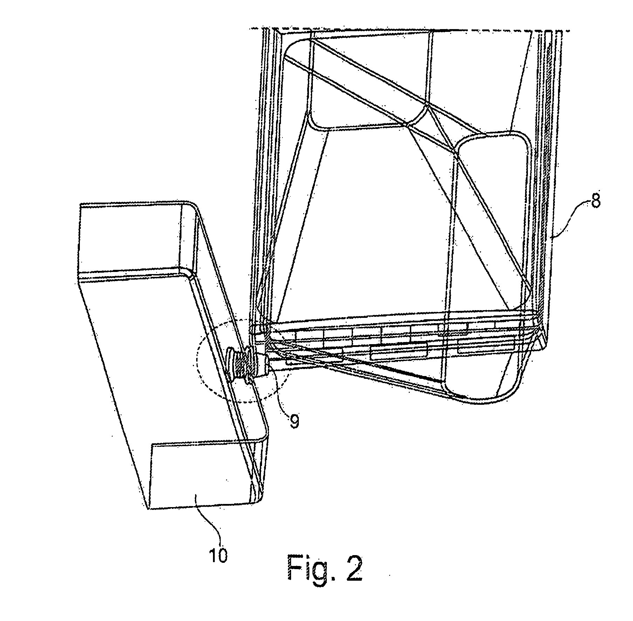

Figur 2 zeigt eine schematische Ansicht einer Verbindung von zwei Gehäuseteilen gemäß einer Ausführungsform der Erfindung. Ein erstes Gehäuse 8 einer kombinierten Gebläse-Filter-Funktionseinheit wird dabei über ein Verbindungselement 9 mit einem zweiten Gehäuse 10, welches in der Ausführungsform ein Verteilergehäuseelement ist, verbunden. Das Verbindungselement 9 ist entlang einer unteren Gehäuseseite des ersten Gehäuses 8 angefügt.

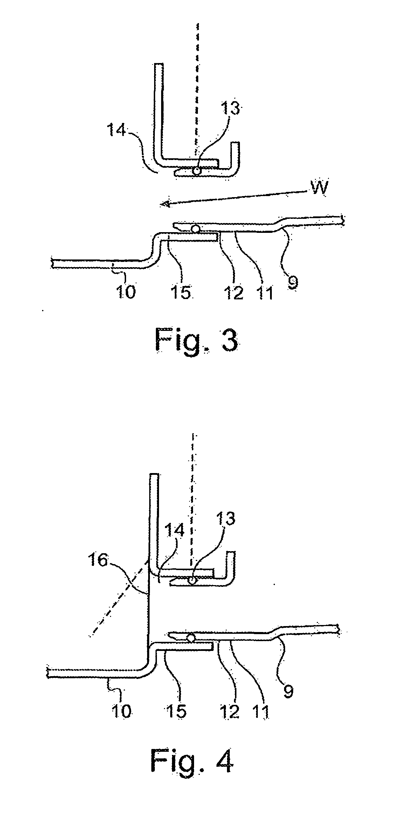

Figur 3 zeigt eine Schnittansicht der Verbindung der zwei Gehäuseteile von Figur 2, wobei ein Ausschnitt vergrößert dargestellt ist, welcher in Figur 2 durch einen gestrichelten Kreis gekennzeichnet ist. Die senkrechte gestrichelte Linie, welche in Figur 3 gezeigt ist, kennzeichnet schematisch die Grenze zwischen der Filter-Gebläse-Funktionseinheit (auf der rechten Seite) und dem Verteiierbereich (auf der linken Seite). Das Verbindungselement 9 weist an einem Endabschnitt 11 einen Stutzen 12 auf, welcher an seinem äußeren Umfang mit einer Dichtung 13 in Form eines O-Rings versehen ist. Das zweite Gehäuse 10 weist eine Öffnung 14 auf, welche ebenfalls mit einem Stutzen 15 versehen ist. Der Stutzen 12 des Verbindungselements 9 weist einen geringfügig kleineren Durchmesser als der Stutzen 15 des zweiten Gehäuses 10 auf, so dass er in den Stutzen 15 einführbar ist und mittels des O-Rings dichtend an dessen Innenwand anliegt.

Figur 4 zeigt eine Schnittansicht einer weiteren Ausführungsform der Verbindung von zwei Gehäuseteilen, welche im Wesentlichen der in Figur 3 gezeigten Ausführungsform entspricht, wobei aber zusätzlich eine Klappe 16 zum Öffnen und Schließen der Öffnung 14 an dieser vorgesehen ist. Die durchgezogene Linie zeigt dabei den geschlossenen Zustand, wohingegen die gestrichelte Linie den geöffneten Zustand zeigt, in welchem die Klappe 16 in den Gehäuseinnenraum des zweiten Gehäuses 10 hineinragt.

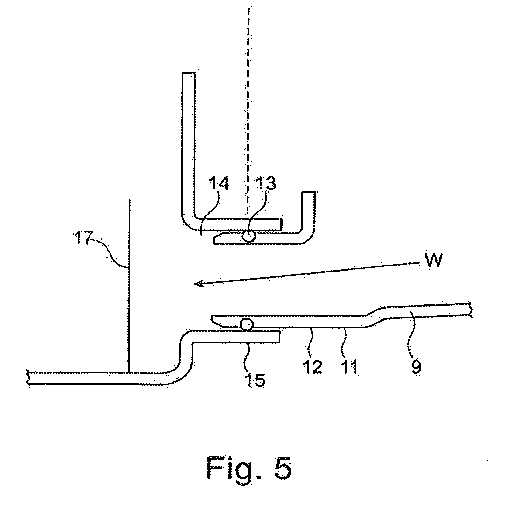

Figur 5 zeigt eine Schnittansicht einer weiteren Ausführungsform der Verbindung von zwei Gehäuseteilen, welche sich von der in Figur 4 gezeigten Ausführungsform dadurch unterscheidet, dass hier keine Klappe 16 zum Öffnen und Schließen der Öffnung 14 vorgesehen ist, sondern ein Labyrinth 17, welches als Drossel für den Wasserstrom W wirkt.

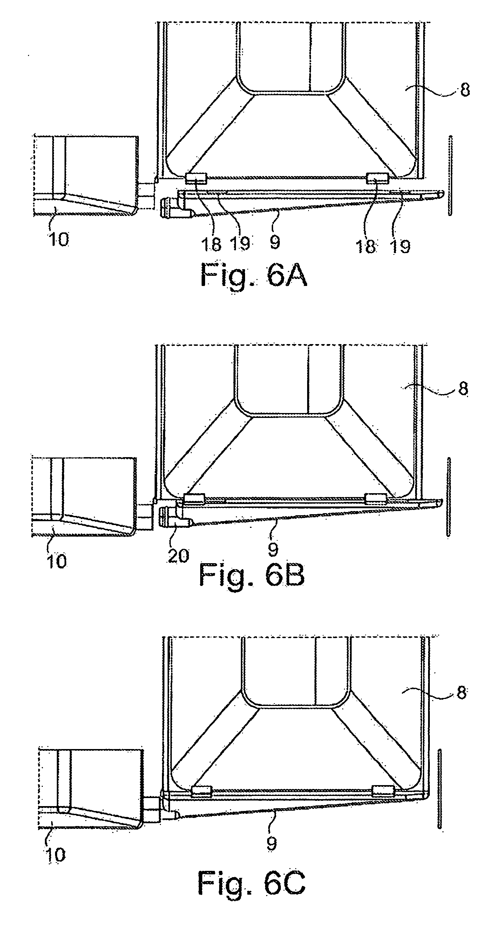

Figuren 6A bis 6C zeigen eine Darstellung des Zusammenbaus des ersten Gehäuses 8 mit dem zweiten Gehäuse 10 und dem Verbindungselement 9. In Figur 6A ist dabei der demontierte Zustand dargestellt. Bei der Montage wird zuerst das Verbindungselement 9 an das erste Gehäuse 8 angesetzt, und dann werden, wie in Figur 6B dargestellt ist, das erste Gehäuse 8 und das Verbindungselement 9 in der Z-Richtung gefügt. Hierzu sind an dem ersten Gehäuse 8 Eingriffselemente 18 vorgesehen, welche beim Zusammenfügen in entsprechende Öffnungen 19 des Verbindungselements 9 eingreifen bzw. darin einrasten. Nach dem Zusammenfügen des ersten Gehäuses 8 und des Verbindungselements 9 wird das Verbindungselement 9 mit dem zweiten Gehäuse über einen Bajonettverschluss 20 auf einfache Art und Weise mit diesem verbunden.

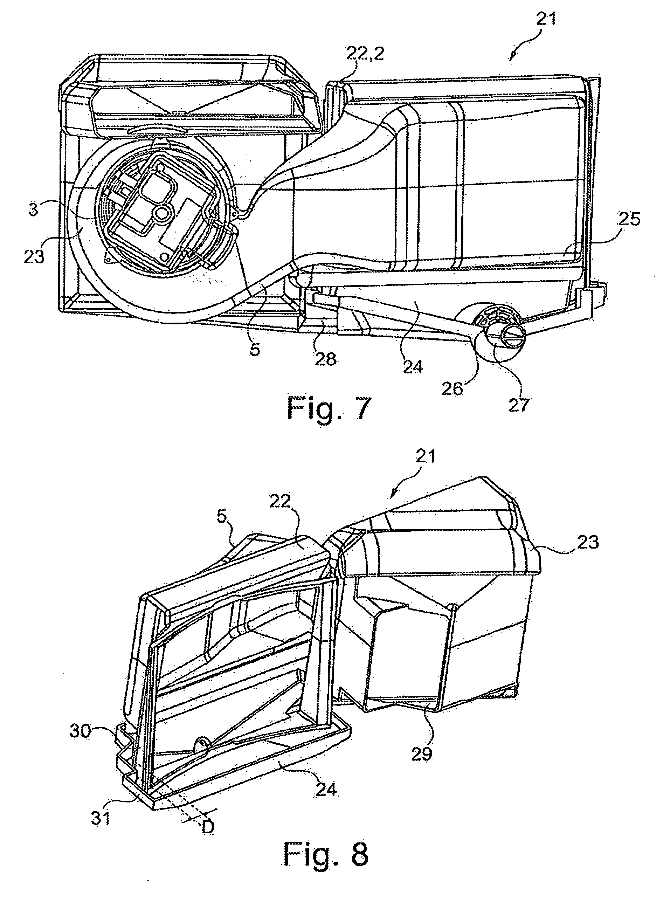

Figur 7 zeigt eine Vorderansicht einer Gebläse-Filter-Funktionseinheit 21 gemäß einer Ausführungsform, welche einen in einem ersten Gehäuseteil 22 der Gebläse-Filter-Funktionseinheit 21 angeordneten Filter 4 zum Filtern der durch das abströmseitig des Filters 4 liegende, in einem zweiten Gehäuseteil 23 untergebrachte Gebläse 3 angesaugten Frischluft oder Umluft aus dem Fahrgastraum aufweist. Die durch den Filter 4 hindurchtretende Luftströmung wird dabei über das Verteilergehäuse 5 zu dem Gebläse 3 geleitet, von welchem es dann wiederum weiter zu einem Verdampfer (hier nicht dargestellt) geführt wird. Insbesondere, wenn die Klimaanlage 1 im Frischluftbetrieb arbeitet, bei der Außenluft in die Klimaanlage 1 angesaugt wird, ist es wichtig, Wasser und Schmutzpartikel aus der Luftströmung zu entfernen, bevor die Luftströmung durch das Gebläse 3 geleitet wird, damit dieses nicht beschädigt wird.

Daher ist gemäß der Ausführungsform unterhalb des Filters 2 bzw. unterhalb des ersten Gehäusesteils 22, in welchem der Filter 2 untergebracht ist, eine Wanne 24 vorgesehen. Die Unterseite des ersten Gehäuseteils 22 ist mit einem Deckel 25 versehen. In dem Deckel 25 werden Schmutzpartikel und Wasser aufgefangen, welche aus der Luftströmung abgeschieden werden, wenn diese den Filter 2 passiert. Der Deckel 25 ist mit einer nicht dargestellten Öffnung versehen, die als Wasserablauf dient. Unterhalb der Öffnung ist an dem Deckel 25 ein ebenfalls nicht dargestellter Stutzen vorgesehen, welcher in die Wanne 24 führt, um das in dem Deckel 25 aufgefangene Wasser und Schmutzpartikel in die Wanne 24 zu leiten. Die Wanne 24 ist wiederum mit einer Öffnung 26 versehen, an welcher ein nach außen abragender halbkreiszylinderförmig ausgebildeter Ablaufstutzen 27 angeformt ist. An den Ablaufstutzen 27 ist beispielsweise ein nicht dargestellter Schlauch anschließbar, der das aufgesammelte Wasser und Schmutzpartikel aus der Klimaanlage 1 und aus der Karosserie des Kraftfahrzeugs heraus ableitet. In der Ausführungsform ist darüber hinaus ein zusätzlicher Bypass-Kanal 28 zum Ableiten von Wasser und Schmutzpartikeln aus dem ersten Gehäuseteil 22, in welchem der Filter 2 untergebracht ist, vorgesehen.

Figur 8 zeigt eine Rückansicht der Gebläse-Filter-Funktionseinheit 21 von Figur 7. Das erste Gehäuseteil 22 ist mit dem zweiten Gehäuseteil 23 über das Verteilergehäuse 5 verbunden. In dem ersten Gehäuseteil 22 wird ein Filter, welcher hier nicht dargestellt ist, untergebracht, der - wie oben bereits beschrieben - eine Luftströmung im Frischluftbetrieb oder im Umluftbetrieb von Wasser und Schmutzpartikeln befreit, bevor sie in das zweite Gehäuseteil 23 eintritt, in weichem das Gebläse, welches ebenfalls hier nicht dargestellt ist, untergebracht ist. An dem zweiten Gehäuseteil 23 ist eine Öffnung 29 vorgesehen, über die aus dem Gebläse austretende Luftströmung über das Verteilergehäuse 5 zu einem ebenfalls nicht dargestellten Verdampfer geleitet wird. Unterhalb des ersten Gehäuseteils 22 ist die Wanne 24 angeordnet, um Schmutzpartikel und Wasser, die aus der durch den Filter (nicht dargestellt) hindurchtretenden Luftströmung abgeschieden werden, auf die oben in Zusammenhang mit Figur 7 beschriebene Art und Weise zu sammeln und erst aus der Klimaanlage 1 und dann aus der Karosserie des Fahrzeugs abzuleiten. Wie in der Figur erkannt werden kann, ist die Wanne 24 etwas breiter ausgebildet als die Unterseite des ersten Gehäuseteils 22, so dass zwischen einer Außenwand 30 des ersten Gehäuseteils 22 und einer Seitenwand 31 der Wanne 24 ein Abstand D besteht, welcher zur Montage der Wanne 24 an dem ersten Gehäuseteil 22 dient.

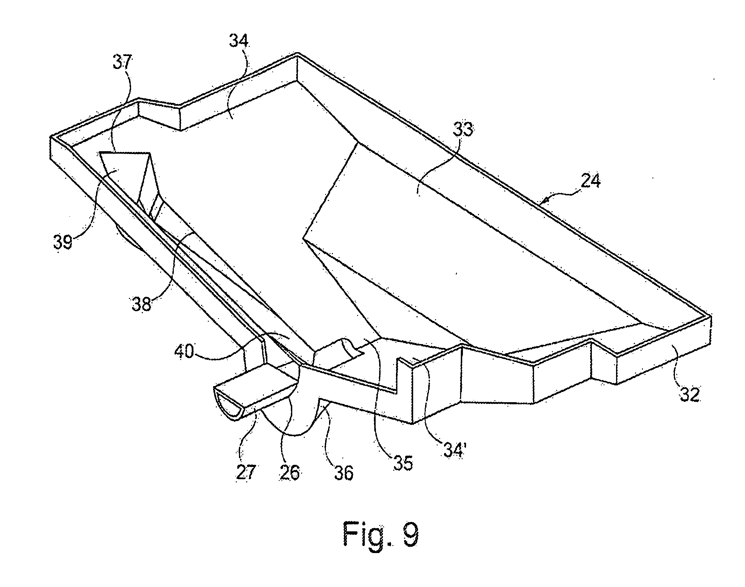

Figur 9 zeigt eine perspektivische Ansicht der Wanne 24 gemäß einer Ausführungsform, welche bei der Gebläse-Filter-Funktionseinheit 21 von Figur 7 eingesetzt wird. Die Wanne 24 weist einen umlaufenden Randabschnitt 32 und einen Boden 33 auf. Der Boden 33 weist darüber hinaus einen ersten und einen zweiten geneigten Abschnitt 34, 34' auf, welche gemeinsam im Wesentlichen eine V-Form bilden. An einem Übergangsbereich 35, an welchem die zwei geneigten Abschnitte 34, 34' in einem Winkel aufeinandertreffen, und weicher die tiefste Stelle des Bodens 33 bildet, ist eine halbkreiszylinderförmig ausgebildete erste Ablaufrinne 36 angeformt, die zu der Öffnung 26 führt. An der Öffnung 26 mündet die erste Ablaufrinne 36 in einen ebenfalls halbkreiszylindrisch ausgebildeten Ablaufstutzen 27, über welchen Wasser und Schmutzpartikel aus der Wanne 24 abgeleitet werden.

Darüber hinaus ist in dem geneigten Abschnitt 34 eine zweite Ablaufrinne 38 ausgebildet, welche sich von einer Öffnung 37 an einem ersten Ende 39 bis in die erste Ablaufrinne 36 an einem zweiten Ende 40 erstreckt bzw. an dem zweiten Ende 40 in die erste Ablaufrinne 36 mündet. Die Öffnung 37 ist vorgesehen, um den oben bereits in Zusammenhang mit Figur 7 beschriebenen, jedoch nicht dargestellten Stutzen des Deckels 25 aufzunehmen, über welchen das in dem Deckel 25 aufgefangene Wasser und Schmutzpartikel in die Wanne 24 geleitet wird. Durch Vorsehen der Wanne 24 können somit Schmutzpartikel und Wasser aus einer Luftströmung, die durch die Gebläse-Filter-Funktionseinheit 21 hindurch geleitet wird, abgeführt werden bzw. aus der Klimaanlage 1 entfernt werden, bevor die Luftströmung in das Gebläse 3 der Gebläse-Filter-Funktionseinheit 21 eintritt Diese Anordnung bewahrt das Gebläse 3 vor möglichen durch Wasser und Schmutzpartikel verursachten Schäden,

insgesamt betrachtet kann mit der erfindungsgemäßen Klimaanlase 1 auf konstruktiv einfache jedoch effektive Art und Weise eine Wasserabscheidung durch Zusammenführen von zwei Wasserabläufen über die Gehäusetrennungen hinweg erzielt werden.

### Bezugszeichenliste

- 1: Klimaanlage
- 2: Filter
- 3: Gebläse
- 4: Verdampfer
- 5: Verteilergehäuse
- 6: Kondenswasserablauf
- 7: Bypass
- 8: erstes Gehäuse
- 9: Verbindungselement
- 10: zweites Gehäuse
- 11: Endabschnitt
- 12: Stutzen des Verbindungselements
- 13: Dichtung
- 14: Öffnung
- 15: Stutzen des zweiten Gehäuses
- 16: Klappe
- 17: Labyrinth
- 18: Eingriffselement
- 19: Öffnung des Verbindungselements
- 20: Bajonettverschluss
- 21: Gebläse-Filter-Funktionseinheit
- 22: erstes Gehäuseteil
- 23: zweites Gehäuseteil
- 24: Wanne
- 25: Deckel
- 26: Öffnung
- 27: Ablaufstutzen
- 28: Bypass-Kanal
- 29: Öffnung
- 30: Außenwand
- 31: Seitenwand
- 32: Randabschnitt
- 33: Boden
- 34, 34': geneigte Abschnitte
- 35: Übergangsbereich
- 36: erste Ablaufrinne
- 37: Öffnung
- 38: zweite Ablaufrinne
- 39: erstes Ende
- 40: zweites Ende
- D: Abstand

## Patentansprüche

1. Klimaanlage (1), insbesondere für ein Kraftfahrzeug, bei welcher eine Vielzahl von Funktionseinheiten in einem Luftströmungspfad angeordnet ist, wobei die Funktionseinheiten zumindest teilweise von jeweiligen Gehäusen (8, 10) umgeben sind, wobei die Vielzahl von Funktionseinheiten zumindest ein Gebläse (3), ein Filter (2) und einen Verdampfer (4) umfasst, wobei zumindest ein erstes Gehäuse (8) der jeweiligen Gehäuse (8, 10) mit einem Verbindungselement (9) zum Ableiten von Kondenswasser und zum direkten dichten Verbinden des ersten Gehäuses (8) über das Verbindungselement (9) mit einem zweiten Gehäuse (10) der jeweiligen Gehäuse (8, 10) versehen ist, **dadurch gekennzeichnet, dass** das Verbindungselement mit dem ersten Gehäuse über Eingriffselemente am ersten Gehäuse und Öffnungen des Verbindungselements verbindbar ist und mit dem zweiten Gehäuse mittels eines Bajonettverschlusses verbindbar ist.

2. Klimaanlage (1) nach Anspruch 1, **dadurch gekennzeichnet, dass** das Verbindungselement (9) einen Stutzen (12) aufweist.

3. Klimaanlage (1) nach Anspruch 1 oder 2, **dadurch gekennzeichnet, dass** das Verbindungselement (9) als Tülle ausgebildet ist.

4. Klimaanlage (1) nach einem oder mehreren der Ansprüche 1 bis 3, **dadurch gekennzeichnet, dass** an dem Verbindungselement (9) eine Dichtung (13), insbesondere ein O-Ring, vorgesehen ist.

5. Klimaanlage (1) nach einem oder mehreren der Ansprüche 1 bis 4, **dadurch gekennzeichnet, dass** das zweite Gehäuse (10), welches mit ersten Gehäuse (8) verbindbar ist, eine Öffnung (14) aufweist, um das Verbindungselement (9) darin aufzunehmen.

6. Klimaanlage (1) nach Anspruch 5, **dadurch gekennzeichnet, dass** die Öffnung (14) mit einem Stutzen (15) versehen ist, in welchen das Verbindungselernent (9) einführbar ist.

7. Klimaanlage (1) nach Anspruch 5 oder 6, **dadurch gekennzeichnet, dass** die Öffnung (14) verschließbar ist.

8. Klimaanlage (1) nach einem oder mehreren der Ansprüche 5 bis 7, **dadurch gekennzeichnet, dass** die Öffnung (14) mit einer Klappe (16) versehen ist, welche zum Öffnen und Schließen der Öffnung (14) ausgebildet ist.

9. Klimaanlage (1) nach einem oder mehreren der Ansprüche 1 bis 8, **dadurch gekennzeichnet, dass** in dem ersten Gehäuse (8) das Filter (2) und/oder das Gebläse (3) angeordnet sind.

10. Klimaanlage (1) nach einem oder mehreren der Ansprüche 1 bis 9, **dadurch gekennzeichnet, dass** das zweite Gehäuse (10), welches mit dem ersten Gehäuse (8) verbindbar ist, ein Verteilergehäuse ist, welches einen Kondenswasserablauf (6) aufweist.

11. Klimaanlage (1) nach Anspruch 10, **dadurch gekennzeichnet, dass** an dem Verteilergehäuse ein Verdampfer (4) angeordnet ist.

12. Klimaanlage (1) nach einem oder mehreren der Ansprüche 1 bis 11, **dadurch gekennzeichnet, dass** das Verbindungselement (9) an dem ersten Gehäuse (8) bezüglich des Lüftströmungspfads vor dem Filter (2) angeordnet ist.

13. Klimaanlage (1) nach einem oder mehreren der Ansprüche 5 bis 12, **dadurch gekennzeichnet, dass** das Verbindungselement (9) mit der mit einem Stutzen (15) versehenen Öffnung (14) des zweiten Gehäuses (10) über einen Bajonettverschluss verbindbar sind.

14. Klimaanlage (1) nach einem oder mehreren der Ansprüche 5 bis 12, dadurch- gekennzeichnet, dass hinter der Öffnung (14) in dem zweiten Gehäuse (10) ein Labyrinth (17) vorgesehen ist.

15. Klimaanlage (1) nach einem der Ansprüche 1 bis 14, **dadurch gekennzeichnet, dass** die Klimaanlage (1) zumindest eine Heizeinrichtung zum Erwärmen des Luftstroms und/oder einen elektrischen Zuheizer und/oder ein Expansionsventil umfasst.

## Claims

1. Air conditioning system (1) in particular for a motor vehicle, in which a large number of functional units are arranged in an air flow path, wherein the functional units are at least partially surrounded by respective housings (8, 10), wherein said large number of functional units include at least a blower (3), a filter (2) and an evaporator (4), wherein at least a first housing (8) of the respective housings (8, 10) is provided with a connecting element (9) for the discharge of condensed water and for direct tight connection of the first housing (8) with a second housing (10) of the respective housings (8, 10) via the connecting element (9), **characterized in that** the connecting element can be connected to the first housing with intervention elements at the first housing and orifices of the connecting element and can be connected to the second housing by means of a bayonet lock.

2. Air conditioning system (1) according to claim 1 **characterized in that** the connecting element (9) disposes of a connector (12).

3. Air conditioning system (1) according to claim 1 or 2, **characterized in that** the connecting element (9) is designed as a nozzle.

4. Air conditioning system (1) according to one or more of claims 1 to 3, **characterized in that** a seal (13), in particular an O-ring, is provided at the connecting element (9).

5. Air conditioning system (1) according to one or more of claims 1 to 4, **characterized in that** the second housing (10) which can be connected to the first housing (8) is provided with an orifice (14) for receiving the connection element (9).

6. Air conditioning system (1) according to claim 5, **characterized in that** the orifice (14) is provided with a connector (15) in which the connection element (9) can be inserted.

7. Air conditioning system (1) according to claim 5 or 6, **characterized in that** the orifice (14) can be closed.

8. Air conditioning system (1) according to one or more of claims 5 to 7, **characterized in that** the orifice (14) is provided with a flap (16) for opening and closing the orifice (14).

9. Air conditioning system (1) according to one or more of claims 1 to 8, **characterized in that** the filter (2) and/or the blower (3) is arranged in the first housing (8).

10. Air conditioning system (1) according to one or more of claims 1 to 9, **characterized in that** the second housing (10) which can be connected to the first housing (8) is a distribution housing provided with a condensed water outlet (6).

11. Air conditioning system (1) according to claim 10, **characterized in that** an evaporator (4) is arranged at the distribution housing.

12. Air conditioning system (1) according to one or more of claims 1 to 11, **characterized in that** the connecting element (9) at the first housing (8) is arranged before the filter (2) with respect to the air flow path.

13. Air conditioning system (1) according to one or more of claims 5 to 12, **characterized in that** the connecting element (9) can be connected with the orifice (14) of the second housing (10) provided with a connector (15) by means of a bayonet lock.

14. Air conditioning system (1) according to one or more of claims 5 to 12, **characterized in that** a labyrinth (17) is provided behind the orifice (14) in the second housing (10).

15. Air conditioning system (1) according to one or more of claims 1 to 14, **characterized in that** the air conditioning system (1) at least comprises a heating facility for heating the air flow and/or an electrical additional heater and/or an expansion valve.

## Revendications

1. Système de climatisation (1), en particulier pour un véhicule automobile, système de climatisation dans lequel une multiplicité d'unités fonctionnelles est disposée dans un trajet d'écoulement d'air, où les unités fonctionnelles sont entourées au moins partiellement par des boîtiers respectifs (8, 10), où la multiplicité d'unités fonctionnelles comprend au moins un pulseur (3), un filtre (2) et un évaporateur (4), où au moins un premier boîtier (8) des boîtiers respectifs (8, 10) est doté d'un élément de liaison (9) servant à l'évacuation d'eau de condensation et servant à l'assemblage étanche direct du premier boîtier (8), via l'élément de liaison (9), avec un second boîtier (10) des boîtiers respectifs (8, 10), **caractérisé en ce que** l'élément de liaison peut être relié au premier boîtier, par des éléments de prise situés sur le premier boîtier et par des ouvertures de l'élément de liaison, et l'élément de liaison peut être relié au second boîtier au moyen d'un joint à baïonnette.

2. Système de climatisation (1) selon la revendication 1, **caractérisé en ce que** l'élément de liaison (9) présente une tubulure (12).

3. Système de climatisation (1) selon la revendication 1 ou 2, **caractérisé en ce que** l'élément de liaison (9) est conçu comme un tuyau de décharge.

4. Système de climatisation (1) selon l'une quelconque ou plusieurs des revendications 1 à 3, **caractérisé en ce qu'**il est prévu, sur l'élément de liaison (9), un joint d'étanchéité (13), en particulier un joint torique.

5. Système de climatisation (1) selon l'une quelconque ou plusieurs des revendications 1 à 4, **caractérisé en ce que** le second boîtier (10), qui peut être relié au premier boîtier (8), présente une ouverture (14) pour y loger l'élément de liaison (9).

6. Système de climatisation (1) selon la revendication 5, **caractérisé en ce que** l'ouverture (14) est dotée d'une tubulure (15) dans laquelle peut être introduit l'élément de liaison (9).

7. Système de climatisation (1) selon la revendication 5 ou 6, **caractérisé en ce que** l'ouverture (14) peut être fermée.

8. Système de climatisation (1) selon l'une quelconque ou plusieurs des revendications 5 à 7, **caractérisé en ce que** l'ouverture (14) est dotée d'un volet (16) qui est conçu pour l'ouverture et la fermeture de l'ouverture (14).

9. Système de climatisation (1) selon l'une quelconque ou plusieurs des revendications 1 à 8, **caractérisé en ce que** le filtre (2) et / ou le pulseur (3) sont disposés dans le premier boîtier (8).

10. Système de climatisation (1) selon l'une quelconque ou plusieurs des revendications 1 à 9, **caractérisé en ce que** le second boîtier (10), qui peut être relié au premier boîtier (8), est un boîtier de répartition qui présente une évacuation d'eau de condensation (6).

11. Système de climatisation (1) selon la revendication 10, **caractérisé en ce qu'**un évaporateur (4) est disposé sur le boîtier de répartition.

12. Système de climatisation (1) selon l'une quelconque ou plusieurs des revendications 1 à 11, **caractérisé en ce que** l'élément de liaison (9) est disposé sur le premier boîtier (8), en amont du filtre (2) par rapport au trajet d'écoulement d'air.

13. Système de climatisation (1) selon l'une quelconque ou plusieurs des revendications 5 à 12, **caractérisé en ce que** l'élément de liaison (9) peut être relié à l'ouverture (14) du second boîtier (10), par un joint à baïonnette, ladite ouverture étant dotée d'une tubulure (15).

14. Système de climatisation (1) selon l'une quelconque ou plusieurs des revendications 5 à 12, **caractérisé en ce qu'**un labyrinthe (17) est prévu dans le second boîtier (10), derrière l'ouverture (14).

15. Système de climatisation (1) selon l'une quelconque des revendications 1 à 14, **caractérisé en ce que** le système de climatisation (1) comprend au moins un dispositif de chauffage servant à chauffer le flux d'air et / ou un appareil de chauffage auxiliaire électrique et / ou un détendeur.
